# EUROPEAN PATENT APPLICATION

(11) **EP 1 785 824 A2**
(43) Date of publication of application: **16.05.2007**
(21) Application number: 06022304.7
(22) Date of filing: 25.10.2006
(51) Int. Cl.: G06F 3/048

(54) **Method for displaying menus in a portable terminal**

(30) Priority: 31.10.2005 KR 20050103241
(71) Applicant: Samsung Electronics Co., Ltd., Suwon-si, Gyeonggi-Do (KR)
(72) Inventor: Won, Jong-Sang, Suwon-si Gyeonggi-do (KR); Choe, Gwang-Woo, Suwon-si Gyeonggi-do (KR); Cha, Jung-Sook, Suwon-si Gyeonggi-do (KR); Nam, Mi-Young, Suwon-si Gyeonggi-do (KR)
(74) Representative: Lang, Johannes

(57) **Abstract**

Disclosed is a method for displaying menus in a portable terminal. Sub-menus included in a predetermined menu are classified corresponding to the menus and displayed in a corresponding direction in relation to a menu icon, when the menu is displayed in the portable terminal. Accordingly, the sub-menus in the predetermined menu are displayed so that users can easily distinguish between the sub-menus, and quickly and conveniently approach a menu.

## Description

### BACKGROUND OF THE INVENTION

### Field of the Invention

The present invention relates to a portable terminal. More particularly, the present invention relates to a portable terminal and a method for managing and displaying data in a portable terminal.

### Description of the Related Art

Conventionally, a portable terminal is recognized in such a manner that data is automatically stored in a predetermined position when there are various types of data stored therein. Previously stored data is displayed in a menu according to a sequential key operation, in order to confirm the stored data. Additionally, when data is displayed, a user must perform several key operations in order to confirm corresponding data, because the data is stored in folders according to the data state and type.

For example, in a conventional method of storing and displaying message data of a short message service (SMS), an incoming message and an outgoing message are individually stored in corresponding folders, and a user must enter each folder in order to confirm the stored message data. Accordingly, it is inconvenient for a user to perform a message confirmation progress because all the message data is not displayed at one time, according to the message type.

Accordingly, there is a need for an improved portable terminal for managing and displaying data in order for a user to easily confirm stored data.

### SUMMARY OF THE INVENTION

An aspect of embodiments of the present invention is to address at least the above problems and/or disadvantages and to provide at least the advantages described below. Accordingly, an aspect of embodiments of the present invention is to provide a method for managing and displaying data of a portable terminal so that various data of the portable terminal can be easily confirmed.

To accomplish the above object, there is provided a method for displaying a menu in a portable terminal. The method includes classifying sub-menus corresponding to the menu. The classified sub-menus are displayed in a corresponding direction in relation to an icon representing the menu, when the menu is displayed in the portable terminal. Data included in the sub-menu is displayed in a preset direction from an icon representing the sub-menu when the sub-menu is selected.

Other objects, advantages, and salient features of the invention will become apparent to those skilled in the art from the following detailed description, which taken in conjunction with the annexed drawings, discloses exemplary embodiments of the invention.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIG. I is a block diagram illustrating the structure of a portable terminal according to an exemplary embodiment of the present invention;
FIG. 2 is a flowchart illustrating a menu display operation according to an exemplary embodiment of the present invention;
FIGs. 3A to 3C are views illustrating an example of an screen image when a menu is displayed according to an exemplary embodiment of the present invention;
FIG. 4 is a flowchart illustrating a menu display operation according to an exemplary embodiment of the present invention; and
FIGs. 5A to 5C are views illustrating an example of a screen image when a menu is displayed according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

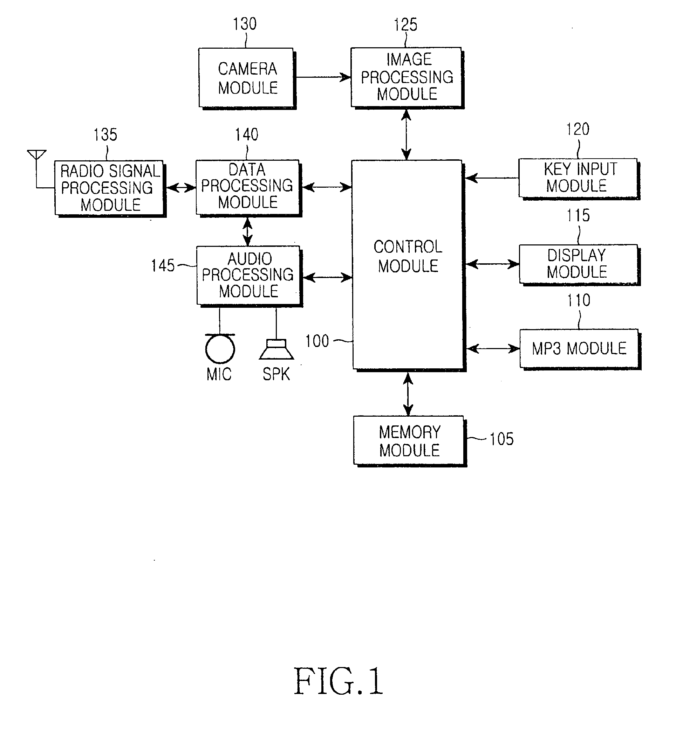

FIG. 1 is a block diagram illustrating the structure of a portable terminal according to an exemplary embodiment of the present invention. A control module 100 controls the operation of the portable terminal. The control module 100 according to an exemplary embodiment of the present invention controls sub-menus of menus according to various functions of the portable terminal, so that the sub-menus are displayed in either an up, down, right, or left direction of the menus icons. When one of the displayed sub-menus is selected, the control module 100 controls a data list of the selected sub-menu so that the data list is displayed in a direction opposite to the direction in which the sub-menu is displayed.

A control module 100 according to an exemplary embodiment of the present invention classifies sub-menus included in the menus according to various functions of the portable terminal. Moreover, the control module 100 controls the sub-menus so that the sub-menus included in a main menu are displayed in a predetermined direction, that is, in an up and down direction or in a left and right direction of the menu icon when the main menu list is displayed. In addition, if the displayed sub-menu is selected, the control module 100 controls the data list included in the sub-menu to be displayed in either a right direction or a left direction.

As described above, according to an exemplary embodiment of the present invention, the control module 100 performs a control operation such that sub-menus corresponding to a menu selected from a user are displayed in a predetermined direction of the menu icon. In addition, if the displayed sub-menu is selected, the control module 100 performs a control operation such that the data list included in the selected sub-menu is displayed in a predetermined direction. For example, if there is a menu of contents downloaded through a radio processing module 135, the control module 100 performs a control operation such that the menu of the contents is inserted into a menu list that corresponds to the menu of the contents and displayed on the portable terminal.

A memory module 105 stores programs executed in the control module 100 or temporarily stores data processed through programs. The memory module 105 stores various ringing sounds, MPEG-Audio Layer-3 (MP3), moving pictures, and the like, all of which can be outputted in the portable terminal. In addition, the memory module 105 stores data such as phone books and messages. The memory module 105 includes a read only memory (ROM) storing an operating system program, an electrically erasable programmable read-only memory (EEPROM), and a random access memory (RAM). The memory module 105 according to an exemplary embodiment of the present invention stores messages, e-mails, and contents. Once sub-menus of a menu selected from a user are displayed, the data list is outputted to the control module 100.

An MP3 module 110 reproduces an MP3 audio file coded in an MP3 format received from a user. The MP3 audio file is stored in the memory module 105 by a user, in order to send MP3 audio data to the control module 100. In addition, the MP3 module 110 outputs audio data received from the control module 100 in order to provide high quality listening music to a user from a speaker or an earphone through a data processing module 140 and an audio processing module 145.

The display module 115 displays a current state, and each process and operation state of the control module 100, according to key input from a key input module 120. In addition, the display module 113 displays image data output in an image processing module 125 and a user interface showing the execution of a photographing function. Herein, the display module 115 may employ a liquid crystal display (LCD). The display module 115 includes an LCD controller, a memory capable of storing image data, and an LCD display element. If the LCD has a touch screen scheme, the key input module 120 and the LCD may be an input module. The display module 115 includes an image data display module outputting image data. The display module 115, according to an exemplary embodiment of the present invention is designed to display icons of menus according to a variety of functions of the portable terminal. In addition, when one of the displayed menus is selected, sub-menus included in the selected menu are displayed in a predetermined direction of the selected menu icons. Accordingly, the display module 115 displays a data list included in the displayed sub-menu in a direction opposite to a direction in which the sub-menu is displayed. In addition, when a certain menu is selected, the display module 115 classifies the sub-menus type that is included in the menu, and displays the sub-menus according to the classified types in the corresponding direction of the menu icon.

The key input module 120 includes keys used for inputting numeral and character information, and function keys used for setting various functions. The key input module 120, according to an exemplary embodiment of the present invention, helps a user to select menus according to a variety of functions of the portable terminal. In addition, the key input module 120 is used for selecting sub-menus according to the selected menu and for selecting data included in the selected sub-menu.

A camera module 130 photographs image data and includes a camera sensor for converting a photographed optical signal into an electrical signal. Herein, the camera sensor may be a CCD sensor. The image processing module 125 generates image data for displaying image signals. The image processing module 125 transmits the image signal received under the control of the control module 100 corresponding to a standard of the display module 115. The image processing module 125 compresses and expands the image data. The image processing module 125 may be included in the camera module 130.

A radio signal processing module 135 conducts communication of the portable terminal. The radio signal processing module 135 includes an RF transmitter for up-converting and amplifying a frequency of a signal to be transmitted, and an RF receiver for low-noise amplifying a received signal and downconverting a frequency of the received signal. The radio signal processing module 135, according to an exemplary embodiment of the present invention, allows reception of contents, text messages, and an e-mail from an external system. In addition, the radio signal processing module 135 transmits data to a predetermined terminal, according to a menu selected from a user to a predetermined terminal.

A data processing module (MODEM) 140 includes a transmitter for coding and modulating the transmitted signal and a receiver for demodulating and decoding the received signal.

An audio processing module 145 may be constructed using a codec including a data codec for processing packet data, and an audio codec for processing an audio signal such as a voice signal. The audio processing module 145 converts a digital audio signal received in the data processing module 140 into an analog signal through the audio codec and reproduces the analog signal. The audio processing module 145 converts a transmitted analog audio signal generated from the microphone into a digital audio signal through the audio codec. The audio processing module 145 then transmits the digital audio signal to the data processing module 140. The codec may be separated from the audio processing module 145 or included in the control module 100.

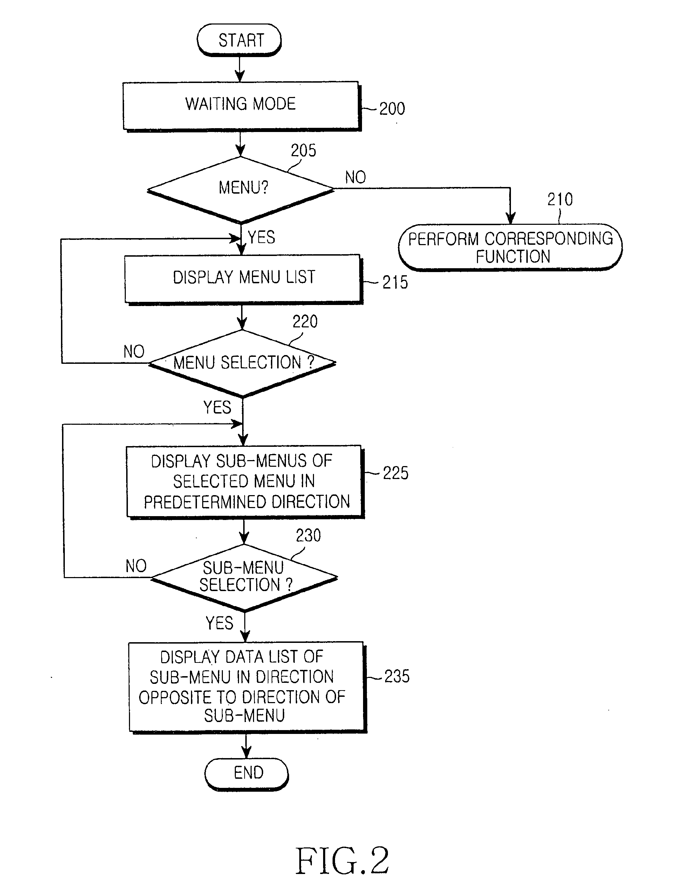

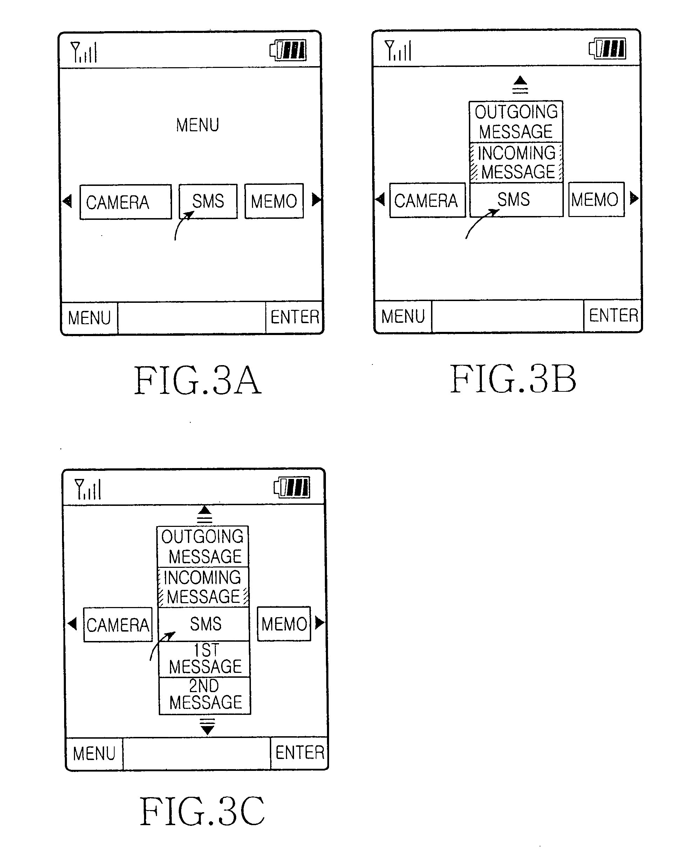

FIG. 2 is a flowchart illustrating an operation for displaying a menu in the portable terminal according to an exemplary embodiment of the present invention. FIGs. 3A to 3C are views illustrating an example of a screen image when a menu is displayed in the portable terminal. The control module 100 of the portable terminal is in a waiting mode in step 200. In step 205, the control module 100 determines if a menu key inputted from a user is received, allowing the display of a list for various functions of the portable terminal. When the control module 100 confirms that a menu key is not inputted as a determination result, the control module 100 performs a function according to an input key in step 210.

If the control module 100 confirms as the determination result that the menu key is inputted from the user, the control module 100 performs step 215 in such a manner that a menu list according to various functions of the portable terminal is displayed as shown in FIGs. 3A. For example, the menu list displayed according to an exemplary embodiment of the present invention includes a camera menu, SMS menu, and memo menu. When a key signal is inputted in the displayed menu list, the control module 100 determines a menu on the displayed menu list selected by the key signal in step 220. If the control module 100 determines the menu selected by the key signal in the displayed menu list, the control module displays sub-menus of the selected menu in a predetermined direction in step 225. Hereinafter, according to an exemplary embodiment of the present invention, an example in which the SMS menu is selected will be described.

If the control module 100 determines that the user selects the SMS menu from among the displayed menus, the control module 100 displays sub-menus corresponding to the SMS menu in an up direction of the SMS menu icon. Accordingly, the control module 100 individually displays an incoming message and an outgoing message (sub-menus of the SMS menu) as shown in FIG. 3B.

Then, when the sub-menus are displayed, the control module 100 determines one selected sub-menu from among the displayed sub-menus in step 230. If the control module 100 determines the selected sub-menu as the determination result, the control module 100 displays a data list of the selected sub-menu in a direction opposite to the sub-menu display direction in step 235. In other words, if the incoming message menu is selected among the displayed sub-menus as shown in FIGs. 3C, the control module 100 displays an incoming message list included in the selected incoming message menu in a down direction of the SMS menu icon.

Herein, the sub-menus and data included in the sub-menus are displayed by a predetermined number. If there are sub-menus and data exceeding the predetermined number, an arrow is displayed so that it is reported that there are additional sub-menus and data.

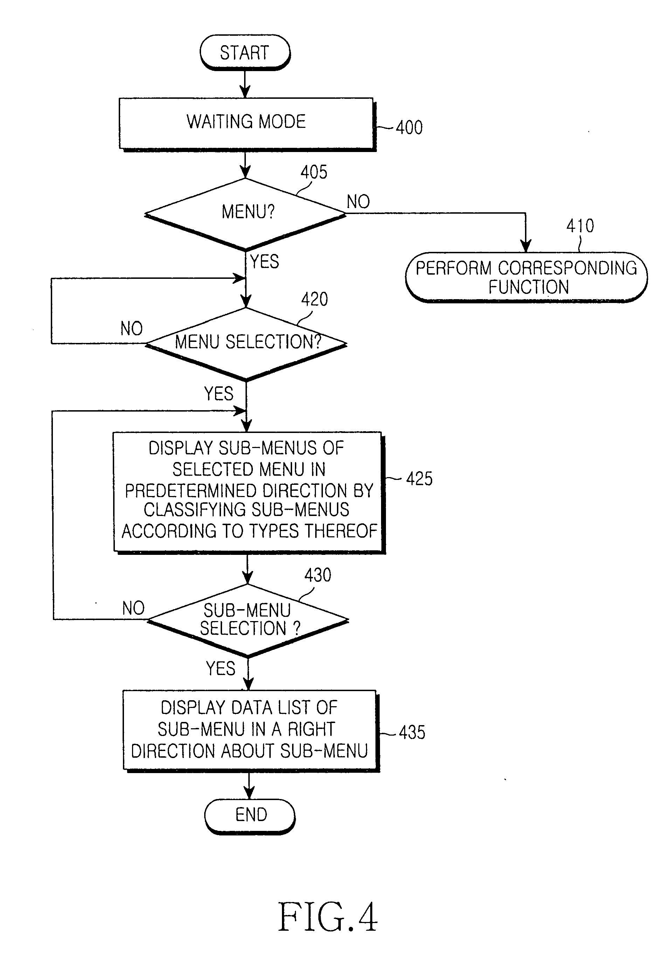

FIG. 4 is a flowchart illustrating an operation for displaying a menu according to an exemplary embodiment of the present invention. FIGs. 5A to 5C are views illustrating an example of a screen image when a menu is displayed in the portable terminal. Steps 400 to 420, corresponds to a menu list that is displayed, if the control module 100 receives a menu key in a waiting mode and one menu in the displayed menu list is selected.

In step 420, the control module 100 receives a key for the selection of a camera menu in the menu list displayed as shown in FIG. 5A. In step 425, the control module 100 classifies sub-menus of the selected camera menu and displays the sub-menus in directions opposite the menu list as shown in FIG. 5B. In other words, the control module 100 classifies sub-menus corresponding to the selected camera menu into a photographing menu and a display menu. Thereafter, the classified sub-menus are divided and displayed in an up and down direction of a camera menu icon. The sub-menus may be classified and displayed according to a user setting.

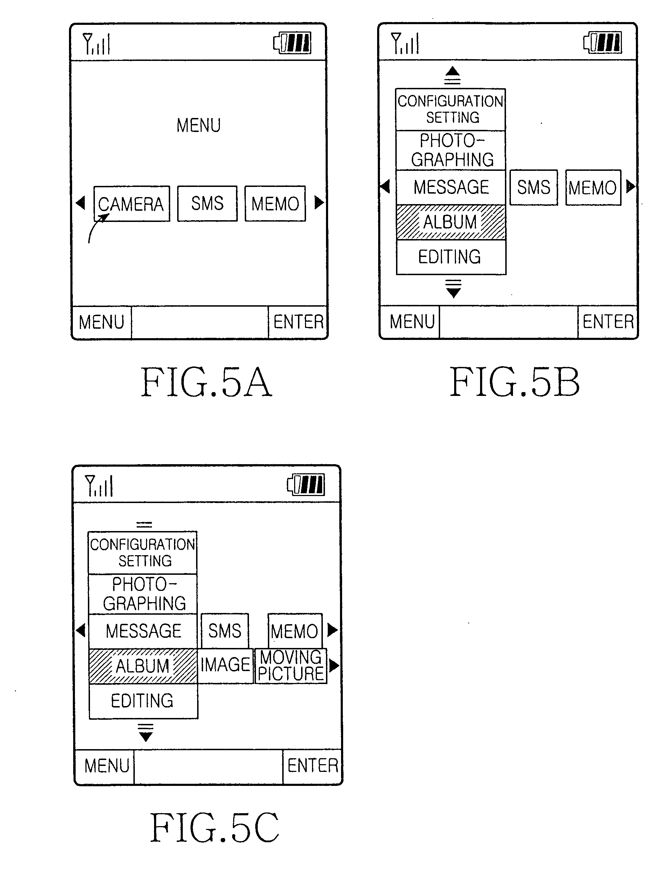

The control module 100 determines one selected sub-menu from the displayed sub-menus in step 430. If the determination result is an album menu selected among the sub-menus of the camera menu as shown in FIG. 5B, an album data list including an image and a moving picture contained in the selected sub-menu is displayed in a right direction of a selected sub-menu icon as shown in FIG. 5C in step 435. The control module 100 displays the predetermined number of data. If there is data exceeding the predetermined number, an arrow is displayed so that the exceeding predetermined number of data is reported as additional data.

Although sub-menus and a data list according to a menu selected from a user are displayed in a specific direction according to an embodiment of the present invention, the display direction may be set by the user, and the sub-menus and the data list may be displayed in various directions according to the user setting.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for displaying a menu in a portable terminal, the method comprising the steps of:
classifying sub-menus corresponding to the menu and displaying the classified sub-menus in a predetermined direction in relation to an icon representing the menu, when the menu is displayed in the portable terminal; and
displaying data included in the sub-menu in a preset direction from an icon representing the sub-menu when the sub-menu is selected.

2. The method as claimed in claim 1, wherein the displaying step comprises classifying the sub-menus into a writing menu and reading menu, when the menu relates to a message or an e-mail.

3. The method as claimed in claim 2, wherein the writing menu and reading menu includes data lists that are displayed in one of a right direction or left direction of the writing menu and reading menu, when the writing menu and the reading menu are displayed in a predetermined direction.

4. The method as claimed in claim 1, wherein the sub-menus are displayed in a predetermined number and if a number of the sub-menu exceeds the predetermined number, an arrow reporting an existence of additional sub-menus, except for the displayed sub-menus, is displayed in a direction in which the sub-menus are displayed.

5. A method for managing and displaying a menu in a portable terminal, the method comprising the steps of:
displaying sub-menus of the menu in a preset direction of an icon representing the menu when the menu is displayed in the portable terminal; and
displaying a data list included in the sub-menu in a direction opposite to a direction in which the sub-menu is displayed when the sub-menu is displayed.

6. The method as claimed in claim 5, wherein the data list included in the sub-menu is displayed in a down direction of the menu icon when the sub-menu is displayed in an up direction of the menu icon, and the data list included in the sub-men is displayed in a right direction of the menu icon when the sub-menu is displayed in a left direction of the menu icon.

7. The method as claimed in claim 5, wherein the sub-menus are displayed by a predetermined number, if the sub-menus exceed the predetermined number, an arrow reporting existence of additional sub-menus, except for the displayed sub-menus, is displayed in a direction in which the sub-menus are displayed.
